# EUROPÄISCHE PATENTSCHRIFT

(11) **EP 3 956 955 B1**
(45) Veröffentlichungstag und Bekanntmachung des Hinweises auf die Patenterteilung: **06.05.2026**
(21) Anmeldenummer: 20714581.4
(22) Anmeldetag: 25.03.2020
(51) Int. Cl.: H01T 13/54, H01T 13/16

(54) **VORKAMMERZÜNDKERZE MIT ANGEPASSTER KAPPENGEOMETRIE**
PRE-CHAMBER SPARK PLUG HAVING ADAPTED CAP GEOMETRY
BOUGIE D'ALLUMAGE DE PRÉCHAMBRE AVEC UNE GÉOMÉTRIE DE CAPUCHON ADAPTÉE

(30) Priorität: 16.04.2019 DE 102019205478
(43) Veröffentlichungstag der Anmeldung: 23.02.2022
(73) Patentinhaber: Robert Bosch GmbH, 70442 Stuttgart (DE)
(72) Erfinder: STEIDTEN, Thomas, 71642 Ludwigsburg (DE); KASKE, Stephan, 75447 Sternenfels Diefenbach (DE); MUELLER, Bernd, 70825 Korntal-Muenchingen (DE); YILMAZ, Ugur, 71679 Asperg (DE)
(86) Internationale Anmeldenummer: PCT/EP2020/058437
(87) Internationale Veröffentlichungsnummer: WO 2020/212106

(56) Entgegenhaltungen:
- EP-A1- 3 173 596
- DE-A1- 102013 223 721
- DE-A1- 102017 107 728
- JP-A- 2013 073 709
- US-A- 2 047 575
- US-A1- 2012 125 287
- US-B2- 9 745 892

## Beschreibung

### Stand der Technik

Die vorliegende Erfindung betrifft eine Vorkammer-Zündkerze mit verbesserter Wärmeabfuhr durch eine angepasste Kappengeometrie.

Vorkammerzündkerzen für Verbrennungskraftmaschinen sind aus dem Stand der Technik bekannt. Beispielsweise zeigt die DE 10 2017 204 241 A1 eine solche Vorkammerzündkerze. Vorkammerzündkerzen umfassen, wie für herkömmliche Zündkerzen bekannt, eine in einem Gehäuse angeordnete Mittelelektrode und eine Masseelektrode, die zwischen sich einen Zündspalt definieren, in dem ein Luft-Brennstoffgemisch entzündet wird. Dieses entzündete Luft-Brennstoffgemisch wird nachfolgend durch Öffnungen in einer am brennraumseitigen Ende der Vorkammer-Zündkerze befindlichen Kappe in eine Hauptbrennkammer geleitet, in der die eigentliche Verbrennung eines Luft-Brennstoffgemischs für den Kolbenhub erfolgt.

Vor allem die Kappe unterliegt starken Temperatureinwirkungen bei einem Betrieb der Vorkammerzündkerze. Durch unzureichende Wärmeabfuhr in der Vorkammerzündkerze kann es zu einem Wärmestau an der Kappe kommen, was zu ungewollten Glühzündungen und somit zu einem erhöhten Kappen- und Elektroden-Verschleiß führen kann. Zudem kann durch unkontrollierte Zündungen eine Schädigung der Verbrennungskraftmaschine erfolgen.

EP3173596 A1, JP 2013 073709A, US 9745892 B2 und DE 10 2017 107728 A1 offenbaren bekannte Vorkammerzündkerzen gemäß des Oberbegriffs des Anspruchs 1.

### Offenbarung der Erfindung

Die erfindungsgemäße Vorkammerzündkerze mit den Merkmalen des Anspruchs 1 zeichnet sich demgegenüber durch eine verbesserte Wärmeaufnahme und Wärmeabfuhr über eine Kappenaußenfläche der Kappe aus. Dadurch wird ein Wärmestau an der Kappe der Vorkammerzündkerze verringert und ungewollte Glühzündungen durch zu hohe Temperaturen der Kappe können vermieden werden. Dies wird erfindungsgemäß erreicht durch eine Vorkammerzündkerze mit einem Gehäuse und mit einer Kappe. Die Kappe ist an einem, in axialer Richtung der Vorkammerzündkerze betrachteten, brennraumseitigen Ende des Gehäuses angeordnet. Kappe und Gehäuse bilden zusammen eine Vorkammer aus. In der Kappe ist zumindest eine Durchtrittsöffnung ausgebildet, welche einen Durchtritt von Gasen aus der Vorkammer durch die Kappe und in den Brennraum ermöglicht. In der Vorkammer erfolgt dabei eine erste Zündung, wobei Fackelstrahlen durch die Durchtrittsöffnung durch die Kappe hindurchgehen und das Kraftstoff-Luft-Gemisch im Brennraum zünden. Zur Erreichung der optimierten Wärmeaufnahme und Wärmeabfuhr ist eine der Vorkammer abgewandte Kappenaußenfläche der Kappe in zumindest einem vordefinierten Verhältnis zu jeweils einem weiteren geometrischen Merkmal der Kappe vorgesehen. Vorteilhafterweise beträgt die Kappenaußenfläche dabei 130mm². Bevorzugt steht die Kappenaußenfläche jeweils mit mehreren verschiedenen geometrischen Merkmalen in einem vordefinierten Verhältnis.

Das heißt, die Geometrie der Kappe ist so angepasst, dass über die Kappenaußenfläche eine verbesserte Wärmeaufnahme und Wärmeabfuhr erreicht ist und somit ein Wärmestau an der Kappe vermieden wird. Insbesondere begünstigen die speziellen Flächenverhältnisse dabei auch eine Wärmeleitung von der Kappe an das Gehäuse. Dadurch wird eine thermische Belastung der Kappe beim Betrieb der Vorkammerzündkerze verringert und eine Lebensdauer der Vorkammerzündkerze erhöht. Insbesondere werden Temperaturen der Kappe durch einen optimierten Wärmetransport verringert, wodurch unkontrollierte Glühzündungen an der Kappe vermieden werden können, was sich weiter vorteilhaft auf die Lebensdauer der Kappe und somit auch der Vorkammerzündkerze auswirkt. Bei einem Einsatz in einer Verbrennungskraftmaschine ermöglicht die Vorkammerzündkerze somit besonders kontrollierte Zündungen des Gas-Luft-Gemischs. Durch die Vermeidung unkontrollierter Glühzündungen wird dabei auch eine Schädigung der Verbrennungskraftmaschine verhindert und ein besonders effizienter Betrieb ermöglicht.

Die Unteransprüche zeigen bevorzugte Weiterbildungen der Erfindung.

Erfindungsgemäß ist ein erstes geometrisches Merkmal, eine der Vorkammer zugewandte Kappeninnenfläche der Kappe. Ein erstes Verhältnis von Kappenaußenfläche zu Kappeninnenfläche beträgt dabei mindestens 1:1 und maximal 3:1. Besonders bevorzugt beträgt das erste Verhältnis 2,167:1. Vorteilhafterweise beträgt die Kappeninnenfläche bei einer Kappenaußenfläche von 130 mm² und einem ersten Verhältnis von 2,167:1 etwa 60 mm². Dadurch wird ein besonders günstiges Verhältnis von Wärmeaufnahme und Wärmeabgabe über die Oberflächen der Kappe erzielt. Vor allem wird eine gute Wärmeabstrahlung über die Kappenaußenfläche erreicht, um die Temperaturen an der Kappe niedrig zu halten.

Besonders günstig ist es, wenn die Kappe einen Flansch aufweist, der in das Gehäuse eingeführt ist, um die Kappe am Gehäuse zu zentrieren. Der Flansch entspricht somit einem Zentrierabsatz, welcher eine definierte Anordnung der Kappe an einem Innenumfang des Gehäuses ermöglicht. Bevorzugt ist dabei eine Presspassung zwischen einem Außenumfang des Flansches und einem Innenumfang des Gehäuses vorgesehen, beispielsweise eine H7/m6-Passung. Dadurch wird ein Wärmeabtransport von der Kappe weiter begünstigt, da über den guten Flächenkontakt zwischen Kappe und Gehäuse eine sehr gute Wärmeleitung von der Kappe in das Gehäuse möglich ist. Von dem Gehäuse ist beispielsweise ein guter Wärmeabtransport über einen Zylinderkopf, in welchen das Gehäuse der Vorkammerzündkerze einschraubbar ist, möglich.

Besonders bevorzugt ist ein zweites geometrisches Merkmal eine Anbindungs-Querschnittsfläche von Flansch und Gehäuse, welche eine thermische Anbindung der Kappe an das Gehäuse beeinflusst. Die Anbindungs-Querschnittsfläche entspricht dabei einer Summe der jeweiligen Querschnittsfläche von Flansch und Gehäuse in einer gemeinsamen Querschnittsebene, wobei diese Querschnittsebene in einem überlappenden Bereich von Flansch und Gehäuse liegt. Das heißt, die Anbindungs-Querschnittsfläche entspricht einer Summe der zwei Kreisringflächen von Flansch und Gehäuse in der Querschnittsebene. Ein zweites Verhältnis von der Kappenaußenfläche zur Anbindungs-Querschnittsfläche beträgt dabei mindestens 1:1 und maximal 3:1. Besonders günstig ist es, wenn das zweite Verhältnis 1,97:1 beträgt. Das heißt, bei einem zweiten Verhältnis von 1,97:1 und einer Kappenaußenfläche von 130mm² beträgt die Anbindungs-Querschnittsfläche vorzugsweise 66mm². Hierdurch kann ein besonders effizienter Weitertransport der Wärme von der Kappe in das Gehäuse erzielt werden. Dies ist besonders vorteilhaft, wenn über das Gehäuse eine weitere Wärmeabfuhr über den von einem Kühlmedium durchströmten Zylinderkopf, in welchen das Gehäuse einschraubbar ist, erfolgt.

Erfindungsgemäß ist ein weiteres geometrisches Merkmal eine Öffnungs-Querschnittsfläche aller Durchtrittsöffnungen. Das weitere geometrische Merkmal entspricht somit einer Gasdurchtrittsfläche, durch welche Gas von der Vorkammer durch die Kappe hindurch in den Brennraum eintreten kann. Ein drittes Verhältnis von der Kappenaußenfläche zur Öffnungs-Querschnittsfläche beträgt dabei mindestens 2:1 und maximal 8:1. Besonders bevorzugt beträgt das Verhältnis 5:1. Vorteilhafterweise beträgt die Öffnungs-Querschnittsfläche aller Durchtrittsöffnungen insgesamt 26 mm², wenn die Kappenaußenfläche 130 mm² beträgt und ein Verhältnis von 5:1 vorgesehen ist. Dadurch kann ein optimales Verhältnis zwischen möglichst großer Wärmeübertragungsfläche und ausreichender Gasdurchtrittsfläche an der Kappe erzielt werden.

Für eine weiter optimierte Wärmeübertragung im Bereich der Kappe ist die Kappenaußenfläche bevorzugt mit einem vierten geometrischen Merkmal in ein viertes Verhältnis gesetzt. Das vierte geometrische Merkmal ist ein Vorkammervolumen in Verbindung mit der Kappeninnenfläche der Kappe. Als Vorkammervolumen wird dabei ein zwischen Kappe und Gehäuse eingeschlossenes Volumen der Vorkammer angesehen. Das vierte Verhältnis aus einer Summe der Kappenaußenfläche und der Kappeninnenfläche zu dem Vorkammervolumen beträgt dabei mindestens 0,2 1/mm und maximal 1 1/mm. Besonders bevorzugt beträgt das vierte Verhältnis 0,38 1/mm. Das Vorkammervolumen liegt dabei bevorzugt bei 500mm³ bei einem vierten Verhältnis von 0,38 1/mm und einer Kappenaußenfläche von 130mm². Vorteilhafterweise ist es alternativ oder zusätzlich dazu möglich, das vierte Verhältnis dimensionslos anzugeben. In diesem Fall könnte das Vorkammervolumen in Bezug auf einen Innendurchmesser der Kappe betrachtet werden. Als Innendurchmesser wird insbesondere ein Innendurchmesser des Flansches der Kappe angesehen. Das heißt, ein dimensionsloses viertes Verhältnis wäre die Summe aus Kappenaußenfläche und Kappeninnenfläche, multipliziert mit dem Innendurchmesser der Kappe. Dieses Produkt ist schließlich ins Verhältnis zu dem Vorkammervolumen gesetzt wird. Ein solches dimensionsloses viertes Verhältnis liegt bevorzugt bei 1:6 bis 2:5, besonders bevorzugt bei 13:58. Da der Innendurchmesser der Kappe bei einer Vergrößerung oder Verkleinerung der Kappe vorzugsweise im gleichen Verhältnis mit den weiteren geometrischen Eigenschaften der Kappe skaliert, können das vierte Verhältnis und das dimensionslose vierte Verhältnis als gleichwertig angesehen werden. Einhergehend mit dieser geometrischen Skalierung ist es weiterhin besonders vorteilhaft, wenn ein Kappenmaterialvolumen in einem vordefinierten fünften Verhältnis zu dem Vorkammervolumen steht.

Besonders bevorzugt weist die Kappe eine plane Stirnseite auf. Die plane Stirnseite bildet dabei einen zentrischen und von dem Gehäuse abgewandten Bereich der Kappenaußenfläche, welcher bevorzugt einen kreisrunden Querschnitt aufweist. Das heißt, die ansonsten sphärische oder kuppelförmige Kappe weist an dessen Stirnseite einen abgeflachten, ebenen Bereich auf. Vorzugsweise beträgt ein Durchmesser des planen Bereichs maximal 100%, besonders bevorzugt 80%, des Innendurchmessers der Kappe.

Vorteilhafterweise liegt die plane Stirnseite in einer Ebene, welche senkrecht zu einer Längsachse der Vorkammerzündkerze ist, um eine einfach zu erstellende und zur Längsachse symmetrische Geometrie der Vorkammerzündkerze zu erhalten. Vor allem ergibt sich dadurch auch eine symmetrische Wärmeaufnahme und Wärmeabgabe an der Kappe. Zudem kann sich die Vorkammerzündkerze beispielsweise gut in einen ebenen Bereich des Zylinderkopfes einfügen. Besonders bevorzugt weist die Kappe zusätzlich eine plane Innenseite auf, welche in axialer Richtung eine Begrenzung der Vorkammer bildet. Die plane Innenseite ist vorzugsweise parallel zur planen Stirnseite und somit ebenfalls senkrecht zur Längsachse angeordnet.

Weiterhin ist es vorteilhaft, wenn die Kappe vier Durchtrittsöffnungen aufweist. Die vier Durchtrittsöffnungen sind dabei an einem Übergang zwischen der Stirnseite und einer Mantelfläche der Kappe angeordnet. Vorzugsweise sind die vier Durchtrittsöffnungen dabei gleichmäßig um den Umfang der Kappe verteilt angeordnet, um eine gleichmäßige Verteilung der Fackelstrahlen beim Betrieb der Vorkammerzündkerze zu erhalten, wodurch eine besonders gleichmäßige und auch effiziente Zündung des Kraftstoff-Luft-Gemischs erreicht werden kann.

Bevorzugt sind die Kappe und das Gehäuse durch eine Schweißverbindung oder alternativ durch eine Lötverbindung miteinander verbunden. Dadurch kann eine besonders gute Stabilität und damit einhergehende Langlebigkeit der Vorkammerzündkerze erreicht werden, wobei auch ein guter Wärmetransport insbesondere von der Kappe an das Gehäuse sichergestellt ist. Zudem wird die Vorkammer durch die Schweißverbindung oder Lötverbindung optimal abgedichtet.

### Kurze Beschreibung der Zeichnungen

Nachfolgend wird ein Ausführungsbeispiel der Erfindung unter Bezugnahme auf die begleitende Zeichnung im Detail beschrieben. In der Zeichnung ist:
- Figur 1: eine schematische Schnittansicht einer Vorkammerzündkerze gemäß einem bevorzugten Ausführungsbeispiel der Erfindung,
- Figur 2: ein vergrößertes Detail der Figur 1, und
- Figur 3: eine weitere schematische Schnittansicht der Vorkammerzündkerze, entlang der Schnittlinie A-A der Figur 2.

### Bevorzugte Ausführungsform der Erfindung

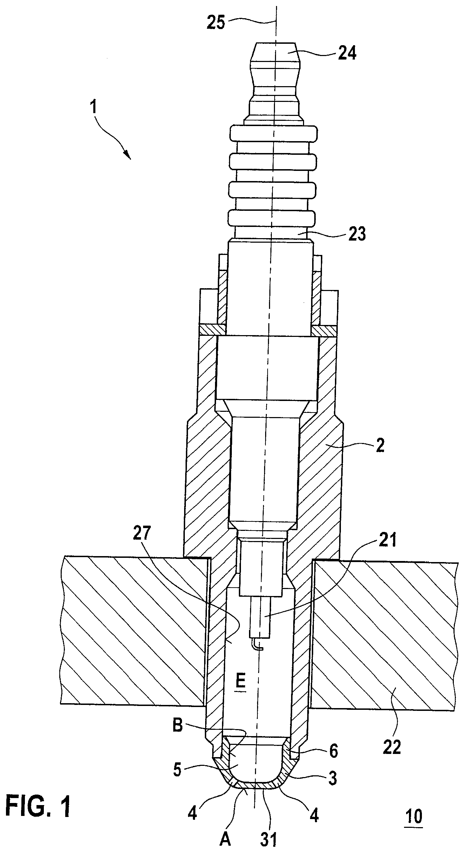

Nachfolgend wird unter Bezugnahme auf die Figuren 1 bis 3 eine Vorkammerzündkerze 1 gemäß einem bevorzugten Ausführungsbeispiel der Erfindung im Detail beschrieben.

Wie aus Figur 1 ersichtlich ist, umfasst die Vorkammerzündkerze 1 ein Gehäuse 2 und eine Kappe 3. Die Kappe 3 ist an einem zu einem Brennraum 10 gewandten Ende des Gehäuses 2 angeordnet. Kappe 3 und Gehäuse 2 bilden zusammen eine Vorkammer 5 der Vorkammerzündkerze 1. Die Vorkammerzündkerze 1 ist in Figur 1 schematisch dargestellt und weist ferner eine Elektrode 21, einen Isolator 23 und einen elektrischen Anschluss 24 auf.

Wie in Figur 1 schematisch dargestellt, ist die Vorkammerzündkerze 1 in einem Zylinderkopf 22 einer Verbrennungskraftmaschine eingeschraubt, derart, dass die Kappe 3 in den Brennraum 10 vorsteht. Dadurch ist die Kappe 3 hohen Temperaturen im Brennraum 10 direkt ausgesetzt.

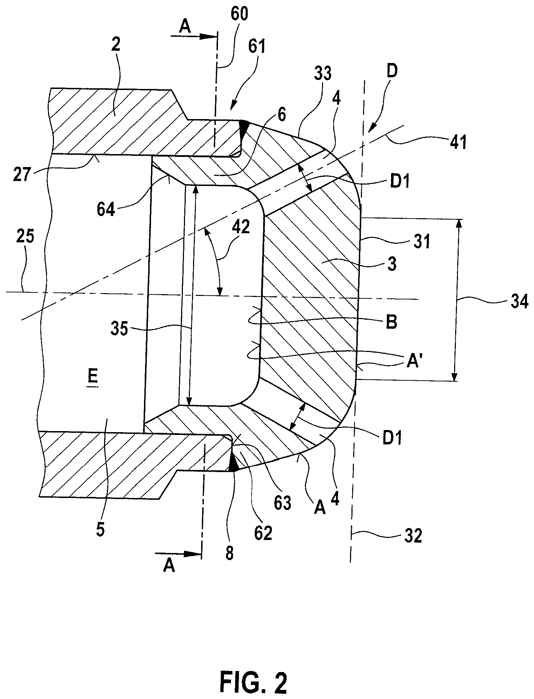

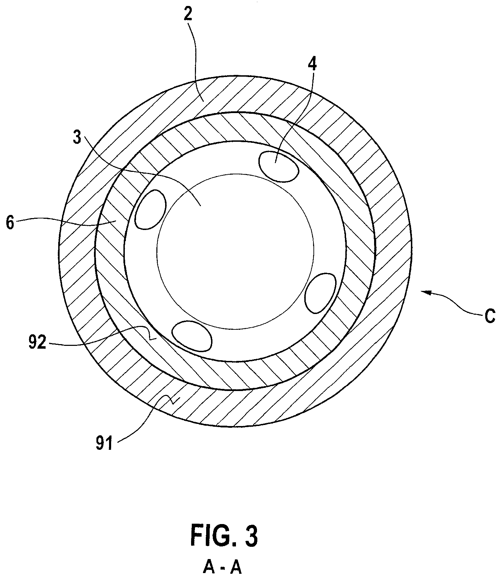

Um die hohen Temperaturen möglichst gut und ohne Beschädigung aufnehmen und abgeben zu können, weist die Vorkammerzündkerze 1 eine in der Geometrie speziell ausgebildete Kappe 3 auf. Die Kappe 3 ist im Detail in den Figuren 2 und 3 ersichtlich. Beispielsweise ist die Kappe 3 dabei aus Nickel gebildet, um eine gute Temperaturbeständigkeit und Wärmeleitung zu bieten.

Die Kappe 3 weist grundsätzlich eine topfähnliche geometrische Gestalt auf und umfasst vier zylindrische Durchtrittsöffnungen 4 (siehe Figur 3), durch welche mittels einer ersten Zündung eines Kraftstoff-Luft-Gemischs in der Vorkammer 5 erzeugte Fackelstrahlen in den Brennraum 10 eintreten können, um das darin befindliche Kraftstoff-Luft-Gemisch zu entzünden. Die Durchtrittsöffnungen 4 sind an einem abgerundeten Bereich der Kappe 3 zwischen einer Mantelfläche 33 und einer planen Stirnseite 31 der Kappe 3 angeordnet. Zudem sind jeweilige Achsen 41 der Durchgangsöffnungen 4 in einem Winkel 42 von 30° gegenüber einer Längsachse 25 der Vorkammerzündkerze 1 angeordnet.

Die Mantelfläche 33 ist als Kegelmantelfläche vorgesehen. Außerdem ist die plane Stirnseite 31 senkrecht zur Längsachse 25 angeordnet und weist einen Durchmesser 34 auf, welcher 80% eines Innendurchmessers 35 der Kappe 3 beträgt.

Die Kappe 3 umfasst ferner einen Flansch 6, mittels welchem die Kappe 3 am Gehäuse 2 der Vorkammerzündkerze 1 befestigt ist. Die Fixierung erfolgt hier kraftschlüssig mittels einer Presspassung H7/m6 sowie formschlüssig mittels einer Schweißverbindung 8 am Außenumfang. Benachbart zum Flansch 6 ist hierbei ein Absatz 62 an der Kappe 3 ausgebildet, welcher an einer Stirnseite 63 des Gehäuses 2 anliegt. An einem axialen Ende des Flansches 6 weist dieser eine Abschrägung 64 auf.

Die speziell ausgebildete Geometrie der Kappe 3, welche den optimierten Wärmetransport an der Kappe 3 ermöglicht, wird nachfolgend beschrieben. Hierbei steht eine der Vorkammer 5 abgewandte Kappenaußenfläche A der Kappe 3 jeweils in mehreren vordefinierten Verhältnissen zu jeweils einem weiteren geometrischen Merkmal der Kappe 3. Die Kappenaußenfläche A entspricht der gesamten äußeren Oberfläche der Kappe 3, welche außerhalb des Gehäuses 2 frei zugänglich ist, und beträgt in dem bevorzugten Ausführungsbeispiel 130 mm².

Ein erstes geometrisches Merkmal ist eine Kappeninnenfläche B der Kappe 3.

Analog zur Definition der Kappenaußenfläche A entspricht die Kappeninnenfläche B der gesamten der Vorkammer 5 zugewandten Oberfläche der Kappe 3. Ein erstes Verhältnis A/B der Kappenaußenfläche A zur Kappeninnenfläche B beträgt dabei 2,167:1. Dadurch ergibt sich eine Kappeninnenfläche B von 60 mm².

Ein zweites geometrisches Merkmal ist eine Anbindungs-Querschnittsfläche C von Flansch 6 und Gehäuse 2. Die Anbindungs-Querschnittsfläche C entspricht dabei einer Summe der Querschnittsflächen 91, 92 von Flansch 6 und Gehäuse 2 in einem überlappenden Bereich 61 dieser beiden Bauteile (vgl. Figur 2 und 3). Im Detail liegt eine erste Querschnittsfläche 91 des Gehäuses 2 sowie auch eine zweite Querschnittsfläche 92 des Flansches 6 in einer gemeinsamen Querschnittsebene 60, welche senkrecht zur Längsachse 25 ist. Die Querschnittsebene 60 entspricht dabei der Schnittebene A-A. Die Kappenaußenfläche A liegt in einem zweiten Verhältnis A/C zur Anbindungs-Querschnittsfläche C von 1,97:1. Somit beträgt die Anbindungs-Querschnittsfläche C 66 mm².

Ein weiteres geometrisches Merkmal ist eine Öffnungs-Querschnittsfläche D der Durchtrittsöffnungen 4. Die Öffnungs-Querschnittsfläche D ist dabei die Summe der einzelnen Öffnungs-Querschnittsflächen D1 aller Durchtrittsöffnungen 4. Die Kappenaußenfläche A steht in einem dritten Verhältnis A/D von 5:1 zur Öffnungs-Querschnittsfläche D. Dadurch ergibt sich eine Öffnungs-Querschnittsfläche D von 26 mm².

Zudem ist ein viertes geometrisches Merkmal ein Vorkammervolumen E in Verbindung mit der Kappeninnenfläche B. Das Vorkammervolumen E entspricht dabei einem gesamten zwischen Kappe 3 und Gehäuse 2 eingeschlossenen Volumen. Das heißt, das Vorkammervolumen E ist durch die Kappeninnenfläche B sowie eine Innenseite 27 des Gehäuses 2 begrenzt. Ein viertes Verhältnis A'/E bildet dabei einen Zusammenhang zwischen Kappenaußenfläche A, Kappeninnenfläche B und Vorkammervolumen E. Im Detail wird eine Summe A' von Kappenaußenfläche A und Kappeninnenfläche B ins Verhältnis zum Vorkammervolumen E gesetzt. Dieses vierte Verhältnis A'/E beträgt dabei 0,38 1/mm. Somit ergibt sich für das Vorkammervolumen E ein Volumen von 500 mm³.

Die erfindungsgemäße Geometrie der Kappe 3 beeinflusst damit auf besonders vorteilhafte Art und Weise die Wärmeübertragung an der Kappe 3 beim Betrieb der Vorkammerzündkerze 1. Die beschriebenen geometrischen Verhältnisse sind speziell so angepasst, um eine optimale Wärmeaufnahme sowie eine Wärmeabgabe an der Kappe 3 zu bewirken. Dadurch können unzulässig hohe Temperaturen, welche die Kappe 3 beschädigen würden oder zu ungewollten Glühzündungen des Kraftstoff-Luft-Gemischs im Brennraum 10 führen könnten, vermieden werden, indem die Wärme sowohl mittels Wärmestrahlung, als auch Wärmeleitung optimal von der Kappe abtransportiert wird.

## Patentansprüche

1. Vorkammerzündkerze, umfassend:
- ein Gehäuse (2), und
- eine Kappe (3), welche zumindest eine Durchtrittsöffnung (4) aufweist,
- wobei die Kappe (3) an einem brennraumseitigen Ende des Gehäuses (2) angeordnet ist,
- wobei die Kappe (3) und das Gehäuse (2) eine Vorkammer (5) ausbilden, und
- wobei eine der Vorkammer (5) abgewandte Kappenaußenfläche (A) der Kappe (3) in zumindest einem vordefinierten Verhältnis (A/B, A/D) zu einem weiteren geometrischen Merkmal der Kappe (3) steht, wobei ein erstes geometrisches Merkmal eine Kappeninnenfläche (B) der Kappe (3) ist, und wobei ein erstes Verhältnis (A/B) der Kappenaußenfläche (A) zur Kappeninnenfläche (B) mindestens 1:1 und maximal 3:1 beträgt, wobei die Kappenaußenfläche (A) einer gesamten äußeren Oberfläche der Kappe (3), die außerhalb des Gehäuses (2) frei zugänglich ist, und die Kappeninnenfläche (B) einer gesamten der Vorkammer (5) zugewandten Oberfläche der Kappe (3) entspricht, **dadurch gekennzeichnet, dass** ein weiteres geometrisches Merkmal eine Öffnungs-Querschnittsfläche (D) aller Durchtrittsöffnungen (4) ist, und wobei ein weiteres Verhältnis (A/D) der Kappenaußenfläche (A) zur Öffnungs-Querschnittsfläche (D) mindestens 2:1 und maximal 8:1 beträgt.

2. Vorkammerzündkerze nach Anspruch 1, wobei ein erstes geometrisches Merkmal eine Kappeninnenfläche (B) der Kappe (3) ist, und wobei das erste Verhältnis (A/B) der Kappenaußenfläche (A) zur Kappeninnenfläche (B) 2,167:1 beträgt.

3. Vorkammerzündkerze nach einem der vorhergehenden Ansprüche, wobei die Kappe (3) einen Flansch (6) aufweist, und wobei der Flansch (6) in das Gehäuse (4) eingeführt ist.

4. Vorkammerzündkerze nach Anspruch 3, wobei ein zweites geometrisches Merkmal eine Anbindungs-Querschnittsfläche (C) von Flansch (6) und Gehäuse (4) in einer gemeinsamen Querschnittsebene (60) ist, wobei die Querschnittsebene (60) in einem überlappenden Bereich (61) von Flansch (6) und Gehäuse (4) liegt, und wobei ein zweites Verhältnis (A/C) der Kappenaußenfläche (A) zur Anbindungs-Querschnittsfläche (C) mindestens 1:1 und maximal 3:1, bevorzugt 1,97:1 beträgt.

5. Vorkammerzündkerze nach einem der vorhergehenden Ansprüche, wobei das weitere Verhältnis (A/D) der Kappenaußenfläche (A) zur Öffnungs-Querschnittsfläche (D) 5:1 beträgt.

6. Vorkammerzündkerze nach einem der vorhergehenden Ansprüche, wobei ein weiteres geometrisches Merkmal ein Vorkammervolumen (E) in Verbindung mit der Kappeninnenfläche (B) ist, und wobei ein weiteres Verhältnis (A'/E) aus einer Summe (A') von Kappenaußenfläche (A) und Kappeninnenfläche (B) zu dem Vorkammervolumen (E) mindestens 0,2 1/mm und maximal 1 1/mm, bevorzugt 0,38 1/mm beträgt.

7. Vorkammerzündkerze nach einem der vorhergehenden Ansprüche, wobei die Kappe (3) eine plane Stirnseite (31) aufweist.

8. Vorkammerzündkerze nach Anspruch 7, wobei die plane Stirnseite (31) in einer Ebene (32) senkrecht zu einer Längsachse (25) der Vorkammerzündkerze (1) liegt.

9. Vorkammerzündkerze nach Anspruch 7 oder 8, wobei die Kappe (3) vier Durchtrittsöffnungen (4) aufweist, und wobei die Durchtrittsöffnungen (4) an einem Übergang zwischen der Stirnseite (31) und einer Mantelfläche (33) der Kappe (3) angeordnet sind.

10. Vorkammerzündkerze nach einem der vorhergehenden Ansprüche, wobei Kappe (3) und Gehäuse (4) durch eine Schweißverbindung (8) oder eine Lötverbindung miteinander verbunden sind.

## Claims

1. Pre-chamber spark plug comprising:
- a housing (2), and
- a cap (3) which has at least one passage opening (4),
- wherein the cap (3) is arranged on a combustion-chamber-side end of the housing (2),
- wherein the cap (3) and the housing (2) form a pre-chamber (5), and
- wherein a cap outer surface area (A), facing away from the pre-chamber (5), of the cap (3) is in at least one predefined ratio (A/B, A/D) to a further geometrical feature of the cap (3), wherein a first geometrical feature is a cap inner surface area (B) of the cap (3), and wherein a first ratio (A/B) of the cap outer surface area (A) to the cap inner surface area (B) is at least 1:1 and at most 3:1, wherein the cap outer surface area (A) corresponds to an entire outer surface area of the cap (3) that is freely accessible outside the housing (2), and the cap inner surface area (B) corresponds to an entire surface area of the cap (3) that faces towards the pre-chamber (5), **characterized in that** a further geometrical feature is an opening cross-sectional area (D) of all the passage openings (4), and wherein a further ratio (A/D) of the cap outer surface area (A) to the opening cross-sectional area (D) is at least 2:1 and at most 8:1.

2. Pre-chamber spark plug according to Claim 1, wherein a first geometrical feature is a cap inner surface area (B) of the cap (3), and wherein the first ratio (A/B) of the cap outer surface area (A) to the cap inner surface area (B) is 2.167:1.

3. Pre-chamber spark plug according to either of the preceding claims, wherein the cap (3) has a flange (6), and wherein the flange (6) is introduced into the housing (4).

4. Pre-chamber spark plug according to Claim 3, wherein a second geometrical feature is an attachment cross-sectional area (C) of the flange (6) and the housing (4) in a common cross-sectional plane (60), wherein the cross-sectional plane (60) is in an overlapping region (61) of the flange (6) and the housing (4), and wherein a second ratio (A/C) of the cap outer surface area (A) to the attachment cross-sectional area (C) is at least 1:1 and at most 3:1, preferably 1.97:1.

5. Pre-chamber spark plug according to one of the preceding claims, wherein the further ratio (A/D) of the cap outer surface area (A) to the opening cross-sectional area (D) is 5:1.

6. Pre-chamber spark plug according to one of the preceding claims, wherein a further geometrical feature is a pre-chamber volume (E) in relation to the cap inner surface area (B), and wherein a further ratio (A'/E) of a sum (A') of the cap outer surface area (A) and the cap inner surface area (B) to the pre-chamber volume (E) is at least 0.2 1/mm and at most 1 1/mm, preferably 0.38 1/mm.

7. Pre-chamber spark plug according to one of the preceding claims, wherein the cap (3) has a planar end side (31).

8. Pre-chamber spark plug according to Claim 7, wherein the planar end side (31) lies in a plane (32) perpendicular to a longitudinal axis (25) of the pre-chamber spark plug (1).

9. Pre-chamber spark plug according to Claim 7 or 8, wherein the cap (3) has four passage openings (4), and wherein the passage openings (4) are arranged at a transition between the end side (31) and a lateral surface (33) of the cap (3).

10. Pre-chamber spark plug according to one of the preceding claims, wherein the cap (3) and the housing (4) are connected to one another by a welded connection (8) or a soldered connection.

## Revendications

1. Bougie d'allumage de préchambre comprenant :
- un boîtier (2), et
- un capuchon (3), qui comporte au moins une ouverture de passage (4),
- le capuchon (3) étant disposé sur une extrémité du boîtier (2) située du côté de la chambre de combustion,
- le capuchon (3) et le boîtier (2) formant une préchambre (5), et
- une surface extérieure (A) du capuchon (3) opposée à la préchambre (5) présentant au moins un rapport prédéfini (A/B, A/D) par rapport à une autre caractéristique géométrique du capuchon (3), une première caractéristique géométrique étant une surface intérieure (B) du capuchon (3), et un premier rapport (A/B) de la surface extérieure (A) de capuchon à la surface intérieure (B) de capuchon étant d'au moins 1:1 et d'au plus 3:1, la surface extérieure (A) de capuchon correspondant à une surface extérieure entière du capuchon (3), qui est librement accessible à l'extérieur du boîtier (2), et la surface intérieure (B) de capuchon correspondant à une surface totale du capuchon (3) tournée vers la préchambre (5), **caractérisée en ce qu'**une autre caractéristique géométrique est une surface de section transversale d'ouverture (D) de toutes les ouvertures de passage (4), et un autre rapport (A/D) de la surface extérieure (A) de capuchon à la surface de section transversale d'ouverture (D) étant d'au moins 2:1 et d'au plus 8:1.

2. Bougie d'allumage de préchambre selon la revendication 1, une première caractéristique géométrique étant une surface intérieure (B) du capuchon (3), et le premier rapport (A/B) de la surface extérieure (A) de capuchon à la surface intérieure (B) de capuchon étant de 2,167:1.

3. Bougie d'allumage de préchambre selon l'une des revendications précédentes, le capuchon (3) comportant une bride (6) et la bride (6) étant introduite dans le boîtier (4).

4. Bougie d'allumage de préchambre selon la revendication 3, une deuxième caractéristique géométrique étant une surface de section transversale de liaison (C) de la bride (6) et du boîtier (4) dans un plan de section transversale commun (60), le plan de section transversale (60) se trouvant dans une zone de chevauchement (61) de la bride (6) et du boîtier (4), et un deuxième rapport (A/C) de la surface extérieure (A) de capuchon à la surface de section transversale de liaison (C) étant d'au moins 1:1 et d'au plus 3:1, de manière préférée de 1,97:1.

5. Bougie d'allumage de préchambre selon l'une des revendications précédentes, le rapport supplémentaire (A/D) de la surface extérieure (A) de capuchon à la surface de section transversale d'ouverture (D) étant de 5:1.

6. Bougie d'allumage de préchambre selon l'une des revendications précédentes, une autre caractéristique géométrique étant un volume (E) de préchambre en lien avec la surface intérieure (B) de capuchon, et un autre rapport (A'/E) d'une somme (A') de la surface extérieure (A) de capuchon et de la surface intérieure (B) de capuchon au volume (E) de préchambre étant d'au moins 0,2 1/mm et d'au plus 1 1/mm, de manière préférée étant de 0,38 1/mm.

7. Bougie d'allumage de préchambre selon l'une des revendications précédentes, le capuchon (3) comportant un côté frontal (31) plan.

8. Bougie d'allumage de préchambre selon la revendication 7, le côté frontal (31) plan se trouvant dans un plan (32) perpendiculairement à un axe longitudinal (25) de la bougie d'allumage (1) de préchambre.

9. Bougie d'allumage de préchambre selon la revendication 7 ou 8, le capuchon (3) comportant quatre ouvertures de passage (4) et les ouvertures de passage (4) étant disposées sur une transition entre le côté frontal (31) et une surface enveloppante (33) du capuchon (3).

10. Bougie d'allumage de préchambre selon l'une des revendications précédentes, le capuchon (3) et le boîtier (4) étant reliés l'un à l'autre par une liaison par soudage (8) ou une liaison par brasage.
